# EUROPEAN PATENT APPLICATION

(11) **EP 3 840 530 A1**
(43) Date of publication of application: **23.06.2021**
(21) Application number: 19401056.7
(22) Date of filing: 20.12.2019
(51) Int. Cl.: H05B 6/12

(54) **A LAYER ASSEMBLY FOR INDUCTION STOVES AND AN INDUCTION STOVE**

(71) Applicant: Karlsruher Institut für Technologie, 76131 Karlsruhe (DE)
(72) Inventor: Silva, Pedro, 76137 Karlsruhe (DE); Korvink, Jan G., 76228 Karlsruhe (DE); Mager, Dario, 69126 Heidelberg (DE)

(57) **Abstract**

The present invention provides a layer assembly for induction stoves and an induction stove comprising said assembly. The inductive layer assembly (1) comprising a upper planar layer (2) that may have any circular or angular base shape and a lower planar layer (3) that may have any circular or angular base shape, provided that said lower planar layers circumference is as large that it at least forms a shape enveloping the circular or angular base shape of the upper planar layer (2). Further, the upper planar layer (2) is arranged respective to said lower planar layer (3), both layers (2,3) are electrically connected to each other via an electric layer connection (4) such that a first current (A) is provided in the upper planar layer (2), and a second current (C) is provided in the lower planar layer (3). Also, the lower planar layer (3) has a slit (8) extending radially from the circumference of the lower planar layer (3) to its and center, and wherein the upper planar layer (2) has a slit (7) laying directly over the slit (8) of said lower planar layer (3). A first current (A) runs contrariwise to the second current (C). The lower planar layer (3) and upper planar layer (2) are placed in a predetermined distance (D) from each other, with the distance (D) being smaller than half of the width of the first current (A).

## Description

The invention relates to a layer assembly for induction stoves and an induction stove comprising such layer assembly.

Induction stoves known from the state of the art have an induction coil which is shielded with massive metal plates underneath in order to block the magnetic field induced by the induction coil above, so that any other elements below the induction coil are protected and will not be heated up by said magnetic field. In order to shield or shape and dissipate the magnetic field, the metal plates of copper and ferrite materials are placed in addition to said plates, which is heavy and expensive.

Also, these kind of metal plates introduces more heating losses on the ferrites and lower heating efficiency for the pot used with such a stove. Other coil assembly are based on actively shielding the magnetic field with electrical materials being impinged with alternating currents, generating eddy currents in the shield or induction coil, heating both up. Efficiency loss is the consequence.

On the basis of this state of the art, the present invention is designed to improve a layer assembly for induction stoves which is lighter in weight and cheap to build.

The object of the invention is solved by the inductive layer assembly for induction stoves having the features of claim 1.

The further object of the invention being to achieve an induction stove which is cheap to build and which shows a good heating efficiency is solved by the induction stove having the features of claim 9.

Further preferred embodiments of the invention are set out in the dependent claims.

A first embodiment of the inductive layer assembly for inductive stoves comprising an upper planar layer that may have any circular or angular base shape and a lower planar layer that may have any circular or angular base shape, provided that said lower planar layers circumference is as large that it at least forms a shape enveloping the circular or angular base shape of the upper planar layer. Further, the upper planar layer is arranged respective to said lower planar layer, both layers are electrically connected to each other via an electric layer connection such that a first current is provided in the upper planar layer, and a second current is provided in the lower planar layer.

A first current runs contrariwise to the second current, wherein the second current is at least three times wider in width than the first current. The lower planar layer and upper planar layer are placed in a predetermined distance from each other, with the distance being smaller than the width of the second current.

The layer assembly induces a focused magnetic field above the upper planar layer and has a shielded bottom side due to its reversed second current, shortening the magnetic field underneath. As such, no heavy ferrite plate is needed and the layer assembly can be built cheap. The working AC frequency of the layer assembly lies between 1 kHz and 1 GHz. For a good working the edges of the coil should be made resonant with a simple capacitor in parallel placed in the circuit of the power supply. Due to the use of the second current as a magnetic shielding, the layer assembly gains a high heating efficiency for any "magnetically" conductive material bringing into the area above said first layer.

The layer assembly works similar to a tubular coaxial cable which is flattened (so-called stripline), being a center flat conductor with two planar conductive layers above and below. The current conducted through the conductor generates a magnetic field reaching into the top layer. By removing the top layer, the magnetic field is allowed to penetrate the top half-space above the conductor but not below, similar to a far-field behavior of a one-sided antenna. By curving this flat conductor, the basis for the layer assembly according to the invention is formed.

Advantageously, the layer assembly used in a stove generates a single sided field. The creation of a unidirectional field helps to improve the efficiency as understood by magnetic field per unit power dissipated (which lowers the power consumption for the same cooking temperature). The production costs for such an assembly are reduced, as the layer assembly according to the invention can be made fully out of two simple copper plates and can be laser cut - a cheap production method. This reduces the costs of the complete assembly and of any stove equipped with such a layer assembly. One of the layers or each of the layers can be patterned with full copper tracks or Litz wire.

In another embodiment of the layer assembly the lower planar layer has a slit extending radially from the circumference of the lower planar layer to its center, and the upper planar layer has a slit laying directly - but with a distance - over the slit of said lower planar layer. This ensures an electrical dysconnectivity in order to gain a circular current, when the layer is formed as a circular plate or a single winding.

According to another embodiment of the layer assembly the upper planar layer and the lower planar layer together form a micro strip. The micro strip can adopt the selected geometry of the lower planar layer, i.e. can be curved. Micro strips are cheap and can easily be brought into the form needed for the layer assembly.

Yet in further embodiment of the layer assembly said lower planar layer has the same geometry as said upper planar layer, but is wider. The magnetic shielding of the area underneath the layer assembly is possible due to the wide return path for the current of the lower planar layer - the second current. Compared to the straight design, the efficiency or inductance of such an assembly is increased.

In another embodiment the upper planar layer is a planar geometrical figure with a recess inside, preferably with a centric recess, most preferred the planar geometrical figure being a ring. The geometrical figure can be circular, square or any other angular shape. Alternatively, the geometrical figure can be a spiral or have multiple windings. In yet another embodiment of the layer assembly the upper planar layer and / or the lower planar layer is a multilayer arrangement.

Further, a measure of the slit of said upper planar layer is thinner than the thickness of said upper planar layer, wherein the measure of the slit of said lower planar layer is thinner than the thickness of said lower planar layer. The width of each slit can range from 0,2 mm to 2 mm (for using high frequency currents in order to prevent spark-over). It can also be larger, but has to ensure that any spark-over will be prevented.

Preferred measures for each layer are as follows: The width or diameter of the upper planar layer lies in a range from 5 to 450 mm, resulting in a width of the first current in a range of 1 to 40 mm. The width of the lower planar layer lies in a range from 10 to 800 mm, resulting in a width of the second current in a range of 5 to 450 mm.

A concrete example measure for the layer assembly could be: For a width of the first current of 5 mm, the slit could be 0,5 mm wide. The dimension of the second current could be at least 15 mm, wherein the distance between both layers would be 5 mm. This example is scalable to bigger measures. The layer thickness can be in a range from 0,2 mm to 2 mm, preferably 1 mm.

According to a further embodiment of the layer assembly, the upper planar layer comprises a first connector and the lower planar layer comprises a second connector, the first connector and the second connector being electrically connectable to a power source. Preferably, said first connector or respectively said second connector are integrally formed with the respective one of upper planar layer and lower planar layer. Alternatively, said first connector or respectively said second connector are separate elements fixed to the respective one of upper planar layer and lower planar layer.

In order to achieve a good electrical current flow, said upper planar layer and said lower planar layer are out of an electroconductive metal, preferably out of copper. Between the layers an insulating material will be used, any which has a low electric permittivity and ideally good thermal conductivity. A casing for the layer assembly should be out of a material which has a good heat dissipation.

Induction stove comprising an inductive layer assembly according to the embodiments described above.

Advantageously, the layer assembly used in the stove has a higher heating efficiency for the pot used compared to stoves of the state of the art, and the lower layer is light in weight and cheap to build.

Further embodiments of the layer assembly as well as some of the advantages which are connected with these and other embodiments of the layer assembly become clear and better understandable by the following detailed description referring to the accompanying figures. The figures are merely a schematic representation of a form of the invention.

It is shown in
- **Fig. 1**: a perspective view of the layer assembly,
- **Fig. 2**: a side view of said layer assembly,
- **Fig. 3**: a schematic side view of an induction stove with magnetic field lines,
- **Fig. 4**: a perspective view of the layer assembly in spiral form, and
- **Fig. 4a**: a magnified view on the layer assembly of Fig. 4.

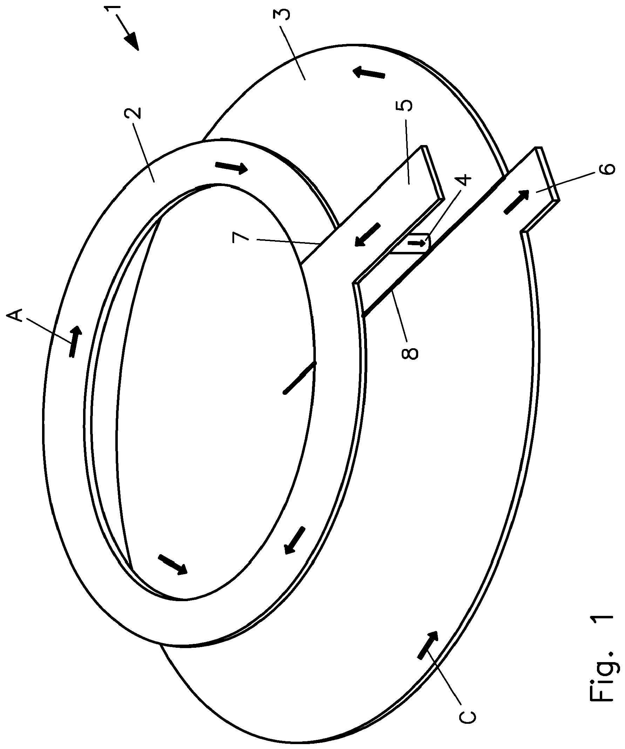

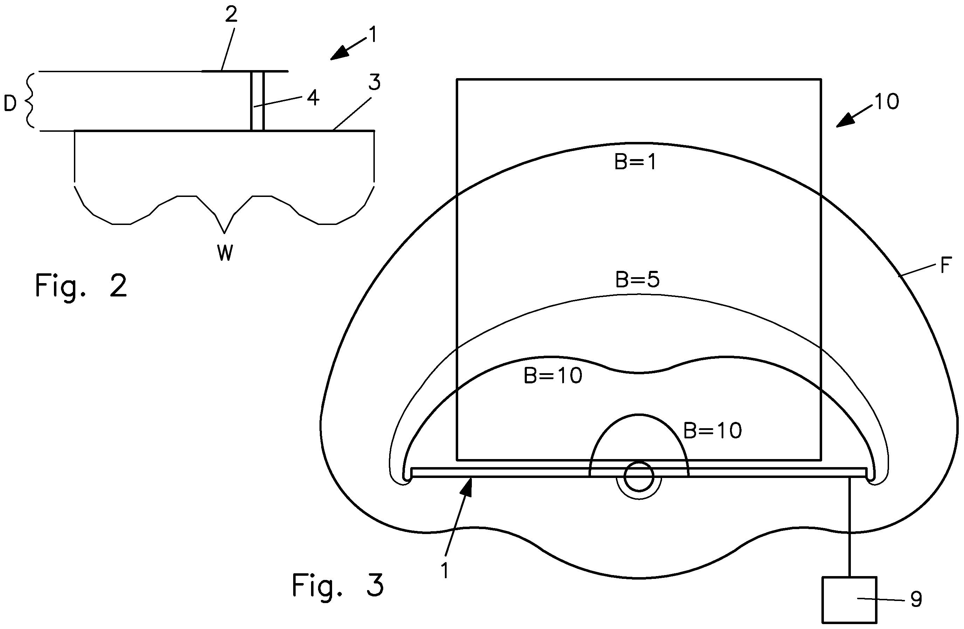

A layer assembly 1 according to **Fig. 1** comprises two layers: An upper planar layer 2 and a lower planar layer 3. The upper planar layer 2 is in **Fig. 1** a circular ring and the lower planar layer 3 a round plate being wider than the upper planar layer 2. Both layers 2,3 are arranged parallel to each other and are connected via electrical connection 4, as also shown in **Fig. 2****.** This connection is small compared to the measures of the layers 2, 3.

The upper planar layer 2 comprises a first connector 5 and the lower planar layer 3 comprises a second connector 6. The first connector 5 and the second connector 6 are electrically connected to a power source 9 (see **Fig. 3**). The first connector 5 and the second connector 6 are integrally formed with the respective one of upper planar layer 2 and lower planar layer 3 and can be connected in the usual way be soldering or clamping external electrical connectors to electric connection lines with the power source 9.

Further, the lower planar layer 3 has a slit 8 extending radially from the circumference of the lower planar layer 3 to its center, and the upper planar layer 2 has a slit 7 laying directly over the slit 8 of said lower planar layer 3.

When connected to said power source 9, a first current A is provided in the upper planar layer 2 and, due to the slits 7, 8 a second current C is provided in the lower planar layer 3. Said first current A runs contrariwise to the second current C. As shown in **Fig. 2**, the lower planar layer 3 and upper planar layer 2 are having a predetermined distance D to each other, with the distance D being smaller than half of a width W of a first current A.

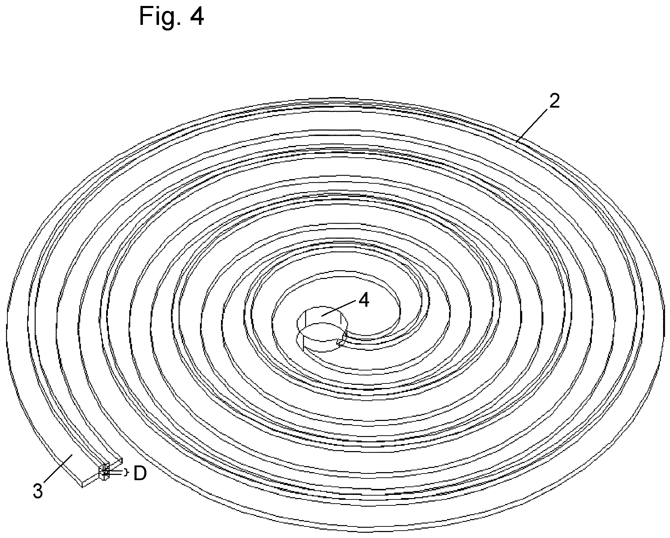

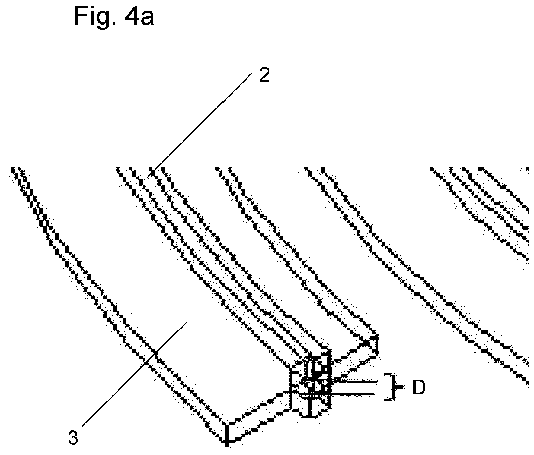

In another geometrical form shown in **Fig. 4**, both layers 2, 3 are spirals having the electrical connection 4 in their center. The functionality is analogue to a simple plate-like structure as shown in **Fig. 1**. The distance between upper layer and lower layer has the same measures and both currents run contrariwise to each other. **Fig. 4a** shows an end portion magnified from **Fig. 4**, wherein distance D between both layers is small compared to the width of both currents A, C.

**Fig. 3** shows the layer assembly 1 connected with a power source 9, functioning as an induction stove. A pot 10 is arranged above the layer assembly 1. The layer assembly 1 is current-carrying and as such forming a magnetic field pictured in **Fig. 3** via magnetic field lines F. In the center of the pot 10 the magnetic field has its highest magnitude with the relative magnetic field strength B being B= 10 (the values being normalized, i. e. relative numbers; wherein a field change can be achieved by tuning the current on the coil) and declines with growing distance to the layer assembly 1 The farther out, the lower the field. In the upper half of the pot, the field only shows a relative strength of B = 1. Due to the distinctive function of the layer assembly 1 as shown in **Fig. 1**, the magnetic field is formed mainly above the layer assembly 1 surrounding and penetrating the pot 10. Below the layer assembly 1, the magnetic field lines F do not form the characteristic dome as above the layer assembly 1, but are subdued, bringing down the magnetic field to 0 and forming a shielding for a stove having this sort of layer assembly 1.

### BEZUGSZEICHENLISTE

- 1: Layer assembly
- 2: Upper planar layer
- 3: Lower planar layer
- 4: Electric layer connection
- 5: First connector
- 6: Second connector
- 7: Slit upper planar layer
- 8: Slit lower planar layer
- 9: Power source
- 10: Pot

- A: First current
- C: Second current
- D: Distance between upper planar layer and lower planar layer
- F: Field lines
- W: Width of the first current

## Claims

1. Inductive layer assembly (1) for induction stoves,
comprising
an upper planar layer (2) that may have any circular or angular base shape, and a lower planar layer (3) that may have any circular or angular base shape, provided that said lower planar layer's (3) circumference is as large that it at least forms a shape enveloping the circular or angular base shape of the upper planar layer (2),
wherein the upper planar layer (2) is arranged respective to said lower planar layer (3),
both layers (2,3) being electrically connected to each other via an electric layer connection (4) such that
- a first current (A) is provided in the upper planar layer (2), and
- a second current (C) is provided in the lower planar layer (3),
wherein the first current (A) runs contrariwise to the second current (C),
wherein the second current (C) is at least three times wider in width than the first current (A), and
wherein the lower planar layer (3) and upper planar layer (2) are placed in a predetermined distance (D) from each other, with the distance (D) being smaller than the width (W) of the second current (C).

2. Layer assembly (1) according to claim 1,
**wherein**
the lower planar layer (3) has a slit (8) extending radially from the circumference of the lower planar layer (3) to its center, and
wherein the upper planar layer (2) has a slit (7) laying directly over the slit (8) of said lower planar layer (3),

3. Layer assembly (1) according to claim 1 or 2,
**wherein** the upper planar layer (2) and the lower planar layer (3) form a micro strip.

4. Layer assembly (1) according to any one of claims 1 to 3,
**wherein**
said lower planar layer (3) has the same geometry as said upper planar layer (2) but is larger.

5. Layer assembly (1) according to any one of claims 1 to 4,
**wherein**
the upper planar layer (2) is planar geometrical figure with a recess inside, preferably with a centric recess, most preferred the planar geometrical figure being a ring.

6. Layer assembly (1) according to any one of claims 1 to 5,
**wherein**
a measure of the slit (7) of said upper planar layer (2) is thinner than the thickness of said upper planar layer (2), and wherein
the measure of the slit (8) of said lower planar layer (3) is thinner than the thickness of said lower planar layer (3).

7. Layer assembly (1) according to any one of claims 1 to 6,
**wherein**
the said upper planar layer (2) and or that lower planar layer (3) is a multilayer arrangement.

8. Layer assembly (1) according to at least one of the claims 1 to 5,
**wherein**
the upper planar layer (2) comprises a first connector (5) and the lower planar layer (3) comprises a second connector (6), the first connector (5) and the second connector (6) being electrically connectable to a power source (11), wherein
said first connector (5) and/or said second connector (6) are integrally formed with the respective one of upper planar layer (2) and lower planar layer (3), or said first connector (5) and/or said second connector (6) are separate elements fixed to the respective one of upper planar layer (2) and lower planar layer (3).

9. Layer assembly (1) according to at least one of the claims 1 to 8,
**wherein**
said upper planar layer (2) and said lower planar layer (3) are out of an electroconductive metal, preferably out of copper.

10. Induction stove comprising an inductive coil assembly
**wherein**
the inductive layer assembly is a layer assembly (1) according to at least one of claims 1 to 9.
